(19) Europäisches Patentamt
European Patent Office
Office européen des brevets

(11) **EP 1 347 235 B1**

(12) **EUROPÄISCHE PATENTSCHRIFT**

(45) Veröffentlichungstag und Bekanntmachung des Hinweises auf die Patenterteilung:
**16.07.2008 Patentblatt 2008/29**

(21) Anmeldenummer: **03005764.0**

(22) Anmeldetag: **14.03.2003**

(51) Int Cl.:
*F22G 5/00* (2006.01)    *F22B 37/38* (2006.01)
*F01K 13/00* (2006.01)

(54) **Verfahren und Anordnung zur Ermittlung einer Dampfmenge**

Method and arrangement for determining the amount of steam

Procédé et systéme pour déterminer la quantité de vapeur

(84) Benannte Vertragsstaaten:
**AT BE BG CH CY CZ DE DK EE ES FI FR GB GR HU IE IT LI LU MC NL PT RO SE SI SK TR**

(30) Priorität: **20.03.2002 DE 10212457**

(43) Veröffentlichungstag der Anmeldung:
**24.09.2003 Patentblatt 2003/39**

(73) Patentinhaber: **Hitachi Power Europe GmbH**
**47059 Duisburg (DE)**

(72) Erfinder: **Melles, Günter, Dipl.-Ing.**
**46286 Dorsten (DE)**

(74) Vertreter: **Viering, Jentschura & Partner**
**Centroallee 263**
**46047 Oberhausen (DE)**

(56) Entgegenhaltungen:
**CH-A- 341 510        DE-A- 4 405 350**

• **PATENT ABSTRACTS OF JAPAN vol. 1997, no. 09, 30. September 1997 (1997-09-30) & JP 09 119602 A (MIURA CO LTD), 6. Mai 1997 (1997-05-06)**

**Beschreibung**

Die Erfindung betrifft ein Verfahren und eine Anordnung zur Ermittlung einer Dampfmenge, die in einem mit mindestens einem Überhitzer ausgerüsteten Dampferzeuger erzeugt wird.

Die Dampf-Mengenmessung in Dampferzeugern dient der Ermittlung der Kessellast und fließt in viele Regelkreise des Dampferzeugers als Lastkriterium ein.

Das bisher gebräuchlichste und zuverlässigste Verfahren zur Bestimmung der Dampfmenge ist die messtechnische Erfassung über Messblenden. Aufgrund des Kostendruckes und aus Gründen der Verringerung des Druckverlustes im Hochdruckbereich geht man jedoch immer häufiger dazu über, die Dampfmenge nicht mehr direkt über Messblenden zu erfassen, sondern aus anderen Prozessgrößen, sogenannten Ersatzwerten, rückwärts zu ermitteln.

Die bekannten Lösungen zur Berechnung z. B. der Dampfmenge aus Ersatzwerten erreichen jedoch im Ergebnis nicht die Qualität bzw. die Genauigkeit einer direkten Dampf-Mengenmessung über Messblenden. Wird bei fehlender Dampf-Mengenmessung die Kessellast über Ersatzsignale gerechnet, ist dies zudem mit einem erhöhten leittechnischen Aufwand verbunden, der sich daraus ergibt, dass eine Reihe von Prozessgrößen ausgewertet und miteinander kombiniert werden muss. Messfehler der einzelnen Einflussgrößen addieren sich auf und beeinflussen die Genauigkeit des Endergebnisses.

Folgende Größen eignen sich dazu, zur Bestimmung eines Ersatzlastsignales herangezogen zu werden:

Radraumdruck der Turbine,
Stellung der Hochdruckumleitstation (HDU),
Stellung des Sicherheitsventils (SIV),
Mengenmessung von Speisewasser und Einspritzwasser,
Feuerungsleistung.

Je nach Anlage und Betriebssituation fließen einzelne oder mehrere dieser Kriterien in die Berechnung mit ein. Die Optimierung und Kalibrierung der Lastberechnung aufgrund der oben genannten Signale führt besonders während der Inbetriebnahmezeit zu einem erhöhten Zeit- und Risikoaufwand. Besonders schwierig ist es, die Kessellast in allen instationären Betriebsarten zu ermitteln, wie z. B. beim Anfahren der Anlage, beim Abfahren der Anlage, oder im modifizierten Gleitdruckbetrieb, Umleitbetrieb und Mischbetrieb mit Turbine, Hochdruckumleitstation und Sicherheitsventil. Gerade für diese Betriebsarten ist ein verlässliches Lastsignal jedoch zwingend erforderlich, um die Anlage sicher zu beherrschen. Einige der oben genannten Signale ergeben speziell im instationären Betrieb kein hinreichend genaues Lastsignal, da Ein- und Ausspeichervorgänge der Anlage nicht erfasst werden. Aus diesem Grund geht man teilweise dazu über, Modellrechnungen für die Lastbestimmung einzusetzen.

Dem Dokument Abstract of Japan Vol. 1997, No. 09, vom 30. September 1997 zur JP 09119602 A vom 6. Mai 1997 ist ein Verfahren zu entnehmen, bei welchem eine Dampfmenge mittels eines Berechnungsverfahrens aus der einem Dampfkessel zugeführten Brennstoffmenge gemessen, mit Hilfe eines Durchflussmessers und eines dadurch erzeugten elektrischen Signales sowie einem gemessenen Dampfdruck ermittelt wird.

Weiterhin ist aus der DE 44 05 350 C2 ein Verfahren zur Bestimmung des Frischdampfmassenstromes in der Frischdampfleitung eines Kraftwerkes bekannt, bei welchem der Frischdampfmassestrom mit Hilfe eines mathematischen Modelles des Dampferzeugers berechnet wird, dem der Soll-Wert der Feuerleistung oder der Ist-Wert der Wärmeleistung oder Kombinationen davon sowie ein Dampfdruck-Messwert zugeführt werden. In die Berechnung fließen je nach Betriebsart der FD Druck, die Stellung der Turbinenventile, die Stellung der HDV-Ventile, die FD Temperatur und die Feuerleistung ein.

Der Erfindung liegt die Aufgabe zu Grunde, ein hinreichend genaues und einfaches Verfahren zu schaffen, das über der Kessellast und auch bei instationären Betriebsarten und Sonderbetriebsarten ein verlässliches Signal für die erzeugte Dampfmenge liefert.

Die Aufgabe wird durch die Merkmale des Patentanspruches 1 gelöst. In dem Patentanspruch 2 ist eine Beziehung zur Ermittlung der Dampfmenge angegeben. Der Patentanspruch 3 ist Gegenstand einer Messanordnung.

Bei dem erfindungsgemäßen Verfahren wird die kostenintensive Dampfmengenmessung mittels Messblenden durch ein kostengünstiges Messverfahren ersetzt, bei dem die Druckverlustmessung einer Messblende durch eine Druckverlustmessung über einer Überhitzerstufe ersetzt wird. Der jeweils aktuell gemessene Druckverlust über einer Überhitzerstufe wird ins Verhältnis gesetzt zu den bei einer durchzuführenden Kalibrierung der Messung gefundenen Referenzwerten und so die jeweils aktuelle Dampfmenge bestimmt. Sich verändernde Dichteeinflüsse des Mediums werden über die Erfassung der Drücke und der Temperaturen vor und nach Überhitzer entsprechend berücksichtigt.

Die Vorteile des erfindungsgemäßen Verfahrens liegen darin, dass die Investitionskosten für eine, oder bei mehrsträngigen Anlagen für mehrere Messblenden entfallen, und kein zusätzlicher Druckverlust im System eingebaut wird. Die Investitionskosten für die erforderliche Differenzdruckmessung über der Überhitzerstufe sind vernachlässigbar gering. Das erfindungsgemäße Verfahren kann in allen Überhitzersystemen angewendet werden und ermöglicht damit eine kostengünstige Dampfmengenbestimmung auch in Systemen, in denen bisher aus Kostengründen darauf verzichtet wurde z. B. in Zwischenüberhitzersystemen.

Die Grenzen des erfindungsgemäßen Verfahrens sind dort gegeben, wo sich aufgrund von schlechter Dampfqualität gewisse Ablagerungen im Überhitzer bilden können, die zu einem entsprechenden Druckverlustanstieg führen. Dieser Vorgang führt über der Zeit zu einer Verschiebung der Referenzwerte und damit zu einer Vergrößerung des Messfehlers. Dieser Messfehler lässt sich aber durch eine regelmäßige Nachkalibrierung und Anpassung der Basiswerte ohne weiteres kompensieren. Bei stationärem Anlagenbetrieb unter Referenzlast ist bei größerer Messabweichung zwischen dem gemessenen Druckverlust und dem Referenzwert des Druckverlustes eine Fehlerindikation eindeutig möglich.

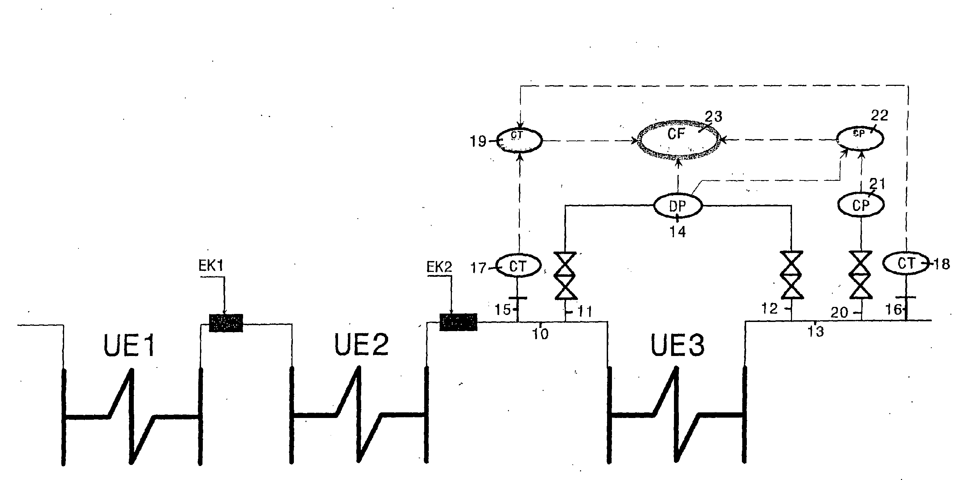

Die Erfindung wird an einem nachfolgend beschriebenen Ausführungsbeispiel und einer in der Zeichnung dargestellten Messausrüstung näher erläutert.

Von einem Dampferzeuger sind drei hintereinander von Hochdruckdampf durchströmte und durch Dampfleitungen miteinander verbundene Überhitzerstufen UE1, UE2 und UE3 gezeigt. Hierbei handelt es sich vorzugsweise um einen separaten Überhitzer. Der die letzte Überhitzerstufe UE3 verlassende Hockdruckdampf wird als Dampf einer nicht gezeigten Dampfturbine zugeführt. Zwischen den Überhitzerstufen UE1, UE2 und UE3 sind zur Einstellung der Dampftemperatur Einspritzkühler EK1 und EK2 angeordnet.

Um in der Dampfmengenmessung auch die über die Einspritzkühler EK1, EK2 eingebrachten Einspritzmengen mit zu erfassen, ist im Bereich der letzten Überhitzerstufe UE3 die nachfolgend beschriebene Messanordnung vorgesehen. Die Messanordnung enthält zwei Druckentnahmeleitungen 11, 12, die unmittelbar vor und hinter der Überhitzerstufe UE3 an die den Hochdruckdampf führenden Dampfleitungen 10, 13 angeschlossen sind. Die Druckentnahmeleitungen 11, 12 sind zu einem Messwertwandler 14 geführt, in dem die ermittelte Druckdifferenz über der Überhitzerstufe UE3 in ein elektrisches Drucksignal umgewandelt wird. In der Dampfleitung 13 vor und hinter der Überhitzerstufe UE3 sind weiterhin Temperaturmessfühler 15, 16 zur Messung der jeweiligen Temperatur des Hochdruckdampfes angeordnet. Die Temperaturmessfühler 15, 16 sind mit jeweils einen Messwertwandler 17, 18 verbunden. Die beiden Temperatur-Messwertwandler 17, 18 sind mit einer Rechenschaltung 19 zur Ermittlung der mittleren Temperatur verbunden. In der Dampfleitung 13 hinter der Überhitzerstufe UE3 ist zur Messung des Dampfdruckes ein Druckmessfühler 20 angeordnet, der mit einem Messwertwandler 21 verbunden ist. In einer Rechenschaltung 22 wird unter Zuhilfenahme des durch den Druckdifferenz-Messwandler 14 ermittelten Differenzdruckes der mittlere Dampfdruck über der Überhitzerstufe UE3 ermittelt. Schließlich umfasst die Messanordnung eine Rechenschaltung 23, die mit dem Differenzdruck-Messwertwandler 14 und den Rechenschaltungen 19, 22 zur Dichtekorrektur verbunden ist und die mit Hilfe der eingegangenen Signale die Menge an Dampf errechnet.

Über die beschriebene Messanordnung werden die folgenden aktuellen Werte bestimmt:

- der Differenzdruck über einer Überhitzerstufe als lastabhängige Komponente,
- der mittlere Druck des Dampfes zwischen Eintritt und Austritt der Überhitzerstufe, der für die Dichtekorrektur erforderlich ist,
- die mittlere Temperatur des Dampfes zwischen Eintritt und Austritt Überhitzerstufe, die für die Dichtekorrektur erforderlich ist.

Diese Werte werden zur Bestimmung der aktuellen Dampfmenge mit Referenzwerten ins Verhältnis gesetzt, die bei der Kalibrierung der Messung ermittelt wurden.

Die Referenzmessung sollte nach Möglichkeit bei Volllast bzw. im oberen Lastbereich unter stationären Anlagenbedingungen durchgeführt werden. Die so gewonnenen Referenzwerte werden in die Rechenschaltung 23 eingegeben. Eine Kalibrierung und Anpassung an die tatsächlichen Verhältnisse ist erforderlich, weil sich aus der Fertigung im Vergleich zur Planung abweichende Wärmeaufnahmen, Rohrwanddicken und Rohrrauigkeiten ergeben können, die wiederum zu Abweichungen gegenüber der ursprünglichen theoretischen Druckverlustberechnung führen. Die Kalibrierung stellt jedoch keinen zusätzlichen Aufwand dar, da auch herkömmliche Messblenden kalibriert werden müssen.

Über z. B. kalibrierte Mengen an Speisewasser und an Einspritzwasser für die Einspritzkühler oder auch über andere geeignete Größen wird die gewünschte Dampfmenge eingestellt und stationär gefahren. Dabei werden folgende Referenzwerte aufgenommen:

$m_{Dampf\ Ref}$ = Referenz-Dampfenge aus Speisewassermenge und Einspritzwassermenge,
$\Delta p_{Ref}$ = Referenz-Druckverlust über der Überhitzerstufe,
$p_{mittel\ Ref}$ = mittlerer Referenz-Druck,
$T_{mittel\ Ref}$ = mittlere Referenz-Temperatur,
$v_{Ref}$ = Referenzwert des spezifischen Volumens als Funktion von $p_{mittel\ Ref}$ und $T_{mittel\ Ref}$.

Nach erfolgter Kalibrierung muss eine Überprüfung der Einstellung bei niedrigeren Lasten jeweils im stationären Betrieb erfolgen.

Aus den gemessenen Werten und den Referenzwerten wird die aktuelle Dampfmenge gemäß der folgenden Beziehung errechnet:

$$m_{Dampf} = (\Delta p_{Ms}/\Delta p_{Ref} * v_{Ref}/v_{Ms} * m_{Dampf\ Ref}^2)^{0,5}$$

darin bedeuten:

$m_{Dampf}$ die gemessene aktuelle Dampfmenge,
$m_{Dampf\ Ref}$ die Referenz-Dampfmenge,
$\Delta p_{Ms}$ der gemessene Druckverlust über der Überhitzerstufe,
$\Delta p_{Ref}$ der Referenzdruckverlust über der Überhitzerstufe.

Dabei werden folgende Zwischenrechnungen durchgeführt:

Druck vor der Überhitzerstufe = Druck nach der Überhitzerstufe + Druckverlust über der Überhitzerstufe [$p_{vor\ UE}$ = $p_{nach\ UE} + \Delta p_{Ms}$],
mittlerer Druck aus Druck vor der Überhitzerstufe und Druck hinter der Überhitzerstufe [$p_{mittel\ Ms}$ = ($p_{vor\ UE} + p_{nach\ UE}$)/2],
mittlere Temperatur aus Temperatur vor der Überhitzerstufe und Temperatur hinter der Überhitzerstufe [$T_{mittel\ Ms}$ = ($T_{vor\ UE} + T_{nach\ UE}$)/2],
gemessenes spezifisches Volumen als Funktion des gemessenen mittleren Druckes und der gemessenen mittleren Temperatur [$V_{Ms} = f(p_{mittel\ Ms}, T_{mittel\ Ms})$],
Referenzwert des spezifischen Volumens [$v_{Ref} = f(p_{mittel\ Ref}, T_{mittel\ Ref})$].

**Patentansprüche**

1. Verfahren zur Ermittlung einer Dampfmenge, die in einem Dampferzeuger erzeugt wird, der mit mindestens einem Überhitzer ausgerüstet ist,
   **dadurch gekennzeichnet,**

   - **dass** der Druckverlust ($\Delta p_{Ms}$) über einer der Überhitzerstufen, vorzugsweise der letzten Überhitzerstufe, kontinuierlich gemessen wird,
   - **dass** die Temperatur ($T_{vor\ UE}$, $T_{nach\ UE}$) des Dampfes vor und hinter dieser Überhitzerstufe kontinuierlich gemessen wird,
   - **dass** der Druck ($p_{nach\ UE}$) des Dampfes hinter dieser Überhitzerstufe kontinuierlich gemessen wird,
   - **dass** in dem Dampferzeuger bei Volllast oder bei einer Last im oberen Lastbereich der Druckverlust ($\Delta p_{Ref}$) über einer Überhitzerstufe, die Menge ($m_{Dampf\ Ref}$) an Dampf und das spezifische Volumen ($v_{Ref}$) des Dampfes ermittelt und als Referenzwerte festgehalten werden,
   - und **dass** die erzeugte Dampfmenge ($m_{Dampf}$) der jeweiligen Last über das Verhältnis der gemessenen Werte ($\Delta p_{Ms}$; $V_{Ms}$) zu den Referenzwerten ($\Delta p_{Ref}$; $v_{Ref}$) bestimmt wird.

2. Verfahren nach Anspruch 1, **dadurch gekennzeichnet, dass** die erzeugte Dampfmenge nach der folgenden Beziehung:

$$m_{Dampf} = (\Delta p_{Ms}/\ \Delta p_{Ref} * v_{Ref}/\ v_{Ms} * m_{Dampf\ Ref}^2)^{0,5}$$

bestimmt wird und wobei
das gemessene spezifische Volumen ($V_{Ms}$) eine Funktion des mittleren Druckes ($P_{mittel\ MS}$) und der gemessenen mittleren Temperatur ($T_{mittel\ Ms}$) d.h. $V_{Ms} = f(p_{mittel\ Ms}, T_{mittel\ Ms})$ ist,
der Referenzwert des spezifischen Volumens ($V_{Ref}$) eine Funktion des mittleren Referenz-Druckes ($P_{mittel\ Ref}$) und der mittleren Referenz-Temperatur ($T_{mittel\ Ref}$) d.h. $V_{Ref} = f(p_{mittel\ Ref}, T_{mittel\ Ref})$ ist,
der Druck vor der Überhitzerstufe ($P_{vor\ UE}$) gleich dem Druck nach der Überhitzerstufe ($P_{nach\ UE}$) plus dem Druck-

verlust über der Überhitzerstufe ($\Delta p_{Ms}$) d.h. $p_{vor\ UE} = p_{nach\ UE} + \Delta p_{Ms}$ ist sowie der mittlere Druck ($P_{mittel\ MS}$) aus dem Druck vor der Überhitzerstufe ($P_{vor\ UE}$) und dem Druck hinter der Überhitzerstufe ($P_{nach\ UE}$) d.h. $p_{mittel\ Ms} = (p_{vor\ UE} + p_{nach\ UE})/2$ errechnet wird und
die mittlere Temperatur ($T_{mittel\ MS}$) aus der Temperatur vor der Überhitzerstufe ($T_{vor\ UE}$) und der Temperatur hinter der Überhitzerstufe ($T_{nach\ UE}$) d.h. $T_{mittel\ Ms} = (T_{vor\ UE} + T_{nach\ UE})/2$ errechnet wird.

**3.** Anordnung zur Ermittlung der Dampfmenge, die in einem Dampferzeuger erzeugt wird, der mit mindestens einem Überhitzer (UE1, UE2, UE3) ausgerüstet ist, **dadurch gekennzeichnet,**

- **dass** an die den Dampf führenden Dampfleitungen (10, 13) vor und hinter einer der Überhitzerstufen, vorzugsweise der letzten Überhitzerstufe (UE3) Druckentnahmeleitungen (11, 12) angeschlossen sind, die mit einem Differenzdruck-Messwertwandler (14) verbunden sind,
- **dass** in den Dampfleitungen (10, 13) vor und hinter der Überhitzerstufe (UE3) je ein Temperaturmessfühler (15, 16) angeordnet ist, der jeweils mit einem Temperatur-Messwertwandler (17, 18) verbunden ist und die Temperatur-Messwertwandler (17, 18) mit einer Rechenschaltung (19) zur Bestimmung der mittleren Temperatur verbunden sind,
- **dass** in der Dampfleitung (13) hinter der Überhitzerstufe (UE3) ein Druckmessfühler (20) angeordnet ist, der mit einem Druck-Messwertwandler (21) verbunden ist, der mit einer Rechenschaltung (22) zur Bestimmung des mittleren Druckes über der Überhitzerstufe unter Zuhilfenahme des Differenzdruckes aus dem Differenzdruck-Messwertwandler (14) verbunden ist
- und **dass** die beiden Rechenschaltungen (19, 22) und der Differenzdruck-Messwertwandler (14) mit einer Rechenschaltung (23) zur Bestimmung der aktuellen Dampfmenge verbunden sind.

**Claims**

**1.** Method for detecting a quantity of vapour generated in a vapour generator which is provided with at least one superheater,
**characterised in that**

- the pressure loss ($\Delta p_{Ms}$) is continuously measured over one of the superheater stages, preferably the last superheater stage,
- the temperature ($T_{vor\ UE}$, $T_{nach\ UE}$) of the vapour upstream and downstream of this superheater stage is continuously measured,
- the pressure ($p_{nach\ UE}$) of the vapour is continuously measured downstream of this superheater stage,
- in the steam generator at full load or with a load in the upper load range, the pressure loss ($\Delta p_{Ref}$) over a superheater stage, the quantity ($m_{Dampf\ Ref}$) of vapour and the specific volume ($v_{Ref}$) of the vapour are established and retained as reference values,
- and **in that** the quantity ($M_{Dampf}$) of vapour generated for the respective load is determined by means of the relationship of the measured values ($\Delta p_{Ms}$; $V_{Ms}$) relative to the reference values ($\Delta p_{Ref}$; $v_{Ref}$).

**2.** Method according to claim 1, **characterised in that** the quantity of vapour generated is determined in accordance with the following relationship:

$$m_{Dampf} = (\Delta p_{Ms}/\ \Delta p_{Ref}\ *\ v_{Ref}/v_{Ms}\ *\ m_{Dampf\ Ref}^{2})^{0.5}$$

and the measured specific volume ($v_{Ms}$) being a function of the mean pressure ($p_{mittel\ Ms}$) and the measured mean temperature ($T_{mittel\ Ms}$), that is to say, $v_{Ms} = f (p_{mittel\ Ms}, T_{mittel\ Ms})$,
the reference value of the specific volume ($v_{Ref}$) is a function of the mean reference pressure ($p_{mittel\ Ref}$) and the mean reference temperature ($T_{mittel\ Ref}$), that is to say, $V_{ref} = f (p_{mittel\ Ref}, T_{mittel\ Ref})$,
the pressure upstream of the superheater stage ($p_{vor\ UE}$) is equal to the pressure downstream of the superheater stage ($P_{nach\ UE}$) plus the pressure loss over the superheater stage ($\Delta p_{Ms}$), that is to say, $p_{vor\ UE} = p_{nach\ UE} + \Delta p_{Ms}$
and the mean pressure ($P_{mittel\ Ms}$) is calculated from the pressure upstream of the superheater stage ($P_{vor\ UE}$) and the pressure downstream of the superheater stage ($P_{nach\ UE}$), that is to say, $P_{mittel\ Ms} = (p_{vor\ UE} + p_{nach\ UE})/2$, and the mean temperature ($T_{mittel\ Ms}$) is calculated from the temperature upstream of the superheater stage ($T_{vor\ UE}$) and the temperature downstream of the superheater stage ($T_{nach\ UE}$), that is to say, $T_{mittel\ Ms} = (T_{vor\ UE} + T_{nach\ UE})/2$.

3. Arrangement for establishing the quantity of vapour generated in a vapour generator which is provided with at least one superheater (UE1, UE2, UE3), **characterised in that**

- there are connected, to the vapour lines (10, 13) which direct the vapour, upstream and downstream of one of the superheater stages, preferably the last superheater stage (UE3), pressure discharge lines (11, 12) which are connected to a differential pressure measurement value convertor (14),
- in the vapour lines (10, 13) upstream and downstream of the superheater stage (UE3), there is arranged in each case a temperature measurement sensor (15, 16) which is connected in each case to a temperature measurement value convertor (17, 18) and the temperature measurement value convertors (17, 18) are connected to a processing circuit (19) in order to determine the mean temperature,
- in the vapour line (13) downstream of the superheater stage (UE3), there is arranged a pressure measurement sensor (20) which is connected to a pressure measurement value convertor (21) which is connected to a processing circuit (22) in order to determine the mean pressure over the superheater stage using the differential pressure from the differential pressure measurement value convertor (14),
- and the two processing circuits (19, 22) and the differential pressure measurement value convertor (14) are connected to a processing circuit (23) in order to determine the current quantity of vapour.

**Revendications**

1. Procédé de détermination d'une quantité de vapeur générée dans un générateur de vapeur équipé d'au moins un surchauffeur,
**caractérisé en ce**

- **que** la perte de pression ($\Delta p_{Ms}$) à travers l'un des étages surchauffeurs, de préférence le dernier étage surchauffeur, est mesurée en continu,
- **que** la température ($T_{avant\_UE}$, $T_{après\_UE}$) de la vapeur avant et après cet étage surchauffeur est mesurée en continu,
- **que** la pression ($p_{aprés\_UE}$) de la vapeur après cet étage surchauffeur est mesurée en continu,
- **qu'**à l'intérieur du générateur de vapeur, à pleine charge ou sous une charge située dans la plage supérieure de charge, la perte de pression ($\Delta p_{ref}$) à travers un étage surchauffeur, la quantité ($m_{vapeur\_ref}$) de vapeur, et le volume spécifique ($V_{ref}$) de la vapeur sont déterminés et sont retenus comme valeurs de référence, et
- **que** la quantité de vapeur générée ($m_{vapeur}$), pour le taux de charge correspondant, est déterminée via le rapport entre les valeurs mesurées ($\Delta p_{Ms}$ ; $V_{Ms}$) et les valeurs de référence ($\Delta p_{ref}$; $v_{ref}$).

2. Procédé selon la revendication 1, **caractérisé en ce que** la quantité de vapeur générée est déterminée selon la relation suivante :

$$m_{vapeur} = (\Delta p_{Ms} / \Delta p_{ref} \cdot V_{ref} / V_{Ms} \cdot m_{vapeur\_ref}^{2})^{0,5}$$

et où
le volume spécifique mesuré ($V_{Ms}$) est une fonction de la pression moyenne ($p_{moyenne\_Ms}$) et de la température mesurée moyenne ($T_{moyenne\_Ms}$), c'est-à-dire que $V_{Ms} = f(p_{moyenne\_Ms}, T_{moyenne\_Ms})$,
la valeur de référence du volume spécifique ($V_{ref}$) est une fonction de la pression moyenne de référence ($p_{moyenne\_ref}$) et de la température moyenne de référence ($T_{moyenne\_ref}$), c'est-à-dire que $V_{ref} = f(p_{moyenne\_ref}, T_{moyenne\_ref})$,
la pression avant l'étage surchauffeur ($p_{avant\_UE}$) est égale à la pression après l'étage surchauffeur ($p_{après\_UE}$) plus la perte de pression à travers l'étage surchauffeur ($\Delta p_{Ms}$), c'est-à-dire que $p_{avant\_UE} = p_{après\_UE} + \Delta p_{Ms}$, et
la pression moyenne ($p_{moyenne\_Ms}$) est calculée à partir de la pression avant l'étage surchauffeur ($p_{avant\_UE}$) et de la pression après l'étage surchauffeur ($p_{après\_UE}$), c'est-à-dire que $P_{moyenne\_Ms} = (p_{avant\_UE} + p_{après\_UE})/2$, et
la température moyenne ($T_{moyenne\_Ms}$) est calculée à partir de la température avant l'étage surchauffeur ($T_{avant\_UE}$) et de la température après l'étage surchauffeur ($T_{après\_UE}$), c'est-à-dire que $T_{moyenne\_Ms} = (T_{avant\_UE} + T_{après\_UE})/2$.

3. Agencement de détermination de la quantité de vapeur générée dans un générateur de vapeur équipé d'au moins un surchauffeur (UE1, UE2, UE3),
**caractérisé en ce**

- **que** des conduites de piquage de pression (11, 12) sont raccordées aux conduites de vapeur (10, 13) conduisant la vapeur, respectivement avant et après l'un des étages surchauffeurs, de préférence du dernier étage surchauffeur (UE3), et sont reliées à un convertisseur de valeur de mesure de pression différentielle (14),
- **qu'**une sonde de mesure de température (15, 16) est disposée dans chacune des conduites de vapeur (10, 13), avant et après l'étage surchauffeur (UE3), et est reliée à un convertisseur de valeur de mesure de température (17, 18), et que les convertisseurs de mesure de température (17, 18) sont reliés à un circuit calculateur (19) destiné à déterminer la température moyenne,
- **qu'**une sonde de mesure de pression (20) est disposée dans la conduite de vapeur (13), après l'étage surchauffeur (UE3), et est reliée à un convertisseur de valeur de mesure de pression (21) qui communique avec un circuit calculateur (22) destiné à déterminer la pression moyenne à travers l'étage surchauffeur, en s'aidant de la pression différentielle fournie par le convertisseur de valeur de mesure de pression différentielle (14), et
- **que** les deux circuits calculateurs (19, 22) et le convertisseur de valeur de mesure de pression différentielle (14) sont reliés à un circuit calculateur (23) destiné à déterminer la quantité momentanée de vapeur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 09119602 A
- DE 4405350 C2

**In der Beschreibung aufgeführte Nicht-Patentliteratur**

- *PATENT ABSTRACTS OF JAPAN,* 30. September 1997, vol. 1997, 09